# EUROPÄISCHE PATENTSCHRIFT

(11) **EP 1 916 286 B1**
(45) Veröffentlichungstag und Bekanntmachung des Hinweises auf die Patenterteilung: **17.12.2014**
(21) Anmeldenummer: 07118106.9
(22) Anmeldetag: 09.10.2007
(51) Int. Cl.: C09K 21/12, C08L 67/06

(54) **Flammwidrige, härtbare Formmassen**
Flame retardant, hardening moulding materials
Masses de formage durcissables et non inflammables

(30) Priorität: 20.10.2006 DE 102006049519
(43) Veröffentlichungstag der Anmeldung: 30.04.2008
(73) Patentinhaber: LANXESS Deutschland GmbH, 50569 Köln (DE)
(72) Erfinder: Hansel, Jan-Gerd, 51469 Bergisch Gladbach (DE); Mauerer, Otto, 42799 Leichlingen (DE)

(56) Entgegenhaltungen:
- EP-A1- 1 403 309
- WO-A1-97/31056
- DE-A1- 3 228 863
- DE-A1- 3 409 434
- US-A1- 2002 010 237

## Beschreibung

Die Erfindung betrifft ein halogenfreies Flammschutzmittel für härtbare Formmassen, die Verwendung solcher Flammschutzmittel zur flammwidrigen Ausrüstung von härtbaren Formmassen, ein Verfahren zur Herstellung von halogenfreien, flammwidrigen härtbaren Formmassen sowie halogenfreie, flammwidrige härtbare Formmassen.

Härtbare Formmassen auf Basis von ungesättigten Polyesterharzen, Epoxidharzen oder Polyurethanen werden zur Herstellung von Beschichtungen, Halbzeugen und Bauteilen, die mit Glasfasern verstärkt sein können, verwendet. Die ausgehärteten Produkte zeichnen sich durch ihre guten mechanischen Eigenschaften, ihre geringe Dichte, weitgehende Chemikalienresistenz und ihre ausgezeichnete Oberflächenqualität aus. Diese Eigenschaften sowie der günstige Preis haben dazu geführt, dass sie in den Anwendungsbereichen Schienenfahrzeuge, Bauwesen und Luftfahrt zunehmend die metallischen Werkstoffe verdrängen.

Abhängig vom jeweiligen Anwendungsgebiet werden an härtbare Formmassen und an die aus ihnen herstellbaren ausgehärteten Produkte unterschiedliche Anforderungen hinsichtlich mechanischer, elektrischer und brandschutztechnischer Eigenschaften gestellt.

Die Anforderungen des Flammschutzes an Baustoffe, Bauteile und Materialien sind umfangreich. So können z. B. Baustoffe und Bauteile gemäß DIN 4102, Bauteile für Elektrogeräte gemäß UL 94 oder IEC-60695-2 und Bauteile für Schienenfahrzeuge gemäß DIN 5510 klassifiziert und für ihre Anwendung entsprechend flammwidrig ausgerüstet werden. Besondere Anforderungen werden z. B. an die Ausrüstung von Luftfahrzeugen (z. B. FAR 25.853) oder Schiffen (z. B. IMO A.652(16)) gestellt. Eine Übersicht über zahlreiche Prüfungen und Anforderungen gibt z. B. Jürgen Troitzsch, "Plastics Flammability Handbook", 2004, Carl Hanser Verlag, München.

Zusätzlich steigen die Anforderungen an den Brandschutz mehr und mehr. So stellen z. B. neue europäische Normen, die die bisherigen nationalen Prüfnormen ablösen sollen, deutlich höhere Anforderungen an den Brandschutz. So verlangt der SBI-Test (EN 13823) beispielsweise nicht nur eine Berücksichtigung des Brandverhaltens, sondern auch der Rauchdichte. Die neue, für Schienenfahrzeuge vorgesehene Norm (prEN 45545) berücksichtigt beispielsweise Rauchgasdichte und Rauchgastoxizität. Anforderungen an die Rauchgastoxizität, die vielfach über die Messung u. a. der Halogenwasserstoffkonzentrationen im Rauchgas bestimmt wird, können z. B. den Einsatz bewährter halogenhaltiger Flammschutzmittel unmöglich machen. Das heißt, für viele Anwendungsgebiete muss eine bewährte und funktionierende Flammschutzausrüstung hinsichtlich neuer normativer Anforderungen überarbeitet werden.

Es ist beispielsweise bekannt, ungesättigte Polyesterharze dadurch flammwidrig einzustellen, dass man brom- oder chlorhaltige Säuren oder Alkoholkomponenten verwendet. Beispiele hierfür sind Hexachloroendomethylentetrahydrophthalsäure (HET-Säure), Tetrabromphthalsäure oder Dibromneopentylglykol. Im Fall von Epoxidharzen wird Flammwidrigkeit nach dem Stand der Technik meistens durch Einbau von Tetrabrom-bisphenol-A als Alkoholkomponente erreicht. Als Synergist wird häufig Antimontrioxid verwendet. Nachteilig an solchen brom- oder chlorhaltigen Harzen ist, dass im Brandfall korrosive Gase entstehen, die zu erheblichen Schäden an elektronischen Bauteilen, etwa an Relais führen können. Von wesentlichem Nachteil ist auch, dass unter ungünstigen Bedingungen polychlorierte oder polybromierte Dibenzodioxine und Dibenzofurane entstehen können. Antimonhaltige Additive sind aus toxikologischen Gründen unerwünscht.

Es besteht somit ein zunehmender Bedarf an halogenfreien und flammwidrigen härtbaren Formmassen, die dann zu flammwidrigen Endprodukten verarbeitet werden können.

Aus dem Stand der Technik, z. B. aus Becker / Braun, Kunststoff Handbuch Duroplaste, Bd. 10, S. 180, S. 291, S. 314, S. 326, Carl Hanser Verlag, München, Wien, 1988, ist bekannt, dass man Formmassen aus ungesättigten Polyesterharzen mit Füllstoffen wie etwa Aluminiumhydroxid ausrüstet. Durch die Wasserabspaltung aus dem Aluminiumhydroxid bei höheren Temperaturen wird hiermit eine gewisse Flammwidrigkeit erreicht. Bei sehr hohen Füllstoffgehalten von 150 bis 400 Teilen Aluminiumhydroxid pro 100 Teile ungesättigtes Polyesterharz kann dann ein Selbstverlöschen und eine geringe Rauchgasdichte erreicht werden. Nachteilig bei solchen Systemen sind das hohe spezifische Gewicht des gesamten Materials und die Beeinträchtigung der mechanischen Eigenschaften. Hohe Füllstoffgehalte vermindern auch die Lichtdurchlässigkeit des Materials. Dies ist für manche Bauteile, wie z. B. Lichtkuppeln, von Nachteil. Bedingt durch die hohe Viskosität solcher ungehärteter, ungesättigter Polyesterharze mit Aluminiumhydroxid oder Magnesiumhydroxid als Flammschutzmittel, gestaltet sich die Verarbeitung schwierig, wenn das Harz zum Spritzen oder Tränken eingesetzt wird. Auch kann mit solchen Rezepturen nicht nach dem Injektionsverfahren gearbeitet werden.

Das vorgenannte Injektionsverfahren ist dadurch gekennzeichnet, dass zwischen zwei starren Formhälften Glasfaserverstärkungen gelegt werden und eine kalt-härtbare Reaktionsmasse nach dem Schließen der Formhälften in den von der Glasfaserverstärkung zum Teil ausgefüllten Hohlraum gespritzt wird. Naturgemäß ist hierfür eine pump- bzw. fließfähige ungesättigte Polyesterharz-Mischung (als Reaktionsmasse) Voraussetzung.

Als Verstärkungsmaterialien werden heutzutage überwiegend Textilglasmatten mit styrolunlöslichen Bindern eingesetzt. Geeignet sind auch Endlosmatten und Gewebe mit verschiedenen Flächengewichten.

Um halogenfreie, flammwidrige ungesättigte Polyesterharze mit niedrigeren Füllstoffgehalten zu erhalten, kann das Aluminiumhydroxid teilweise oder ganz durch andere Flammschutzmittel ersetzt werden. Aus US 3,909,484 ist die Kombination von Aluminiumhydroxid mit Alkylphosphaten bekannt. In EP-A 0 308 699 wird die Kombination von Aluminiumhydroxid mit Ammoniumpolyphosphat beschrieben. Nach DE-A 2 159 757 eignen sich Mischungen von Aluminiumhydroxid mit 1,3,5-Triazin-2,4,6-triamin zur Herstellung flammwidriger ungesättigte Polyesterharze. Die Verwendung von rotem Phosphor als Flammschutzmittel für ungesättigte Polyesterharze ist bekannt, zum Beispiel aus EP-A 0 848 035. Nachteilig ist dabei die schwierige Verarbeitung des selbstentzündlichen roten Phosphors, seine Neigung, giftigen Phosphorwasserstoff zu bilden und seine intrinsische rote Farbe.

Alle vorgenannten ungesättigten Polyesterharze sowie die zu ihrer Herstellung beschriebenen Verfahren weisen jedoch den erheblichen Nachteil auf, dass sie immer noch sehr hohe Füllstoffgehalte enthalten und daher mittels den industriell weit verbreiteten Injektionsverfahren nicht zu den erwünschten Produkten verformt werden können. Sämtliche bisher bekannten Kombinationen von Aluminiumhydroxid mit anderen Flammschutzmitteln oder anderen Flammschutzmittelsystemen können auf diese Art und Weise nicht oder nur schwierig verarbeitet werden.

In CA 2 334 274 wird Blähgraphit als Flammschutzmittel für ungesättigte Polyesterharze vorgeschlagen. Obwohl hier die gewünschte Flammwidrigkeit mit sehr niedrigen Füllstoffgehalten erreicht werden kann, bleibt diese Lösung auf Spezialanwendungen beschränkt. Die im Vergleich zu den üblichen festen Flammschutzmitteln extrem grossen Blähgraphitteilchen erschweren, bzw. verhindern eine Verarbeitung nach dem Injektions-, Spritz- oder Tränkverfahren. Nachteilig ist auch die schwarze Eigenfarbe des Blähgraphits.

WO 97/31056 beschreibt die Kombination von 1,3,5-Triazin-2,4,6-triamin mit phosphorhaltigen Additiven, z. B. Ethylendiaminphosphat, als Flammschutzmittel für halogenfreie, ungesättigte Polyesterharze. Als niedrigste effektive 1,3,5-Triazin-2,4,6-triamin-Menge werden 15 Gew.-% bezogen auf die gesamte Harzzubereitung, bevorzugt 20 Gew.-%, genannt. In den Beispielen von WO 97/31056 beträgt die niedrigste 1,3,5-Triazin-2,4,6-triamin-Menge 20 Gew.-%.

EP-A 1 403 309 und EP-A 1 403 310 beanspruchen flammwidrige duroplastische Massen z. B. auf Basis von ungesättigten Polyesterharzen oder von Epoxidharzen, die als Flammschutzmittel eine Kombination von Phosphinsäuresalzen mit Synergisten enthalten. Phosphinsäuresalze zeichnen sich durch eine hohe thermische Beständigkeit bis über 300 °C aus. Sie werden daher z. B. in der flammwidrigen Ausrüstung von Polyamid eingesetzt. Zur Herstellung von Phosphinsäuresalzen ist eine aufwändige, mehrstufige Synthese notwendig, die wegen der Handhabung niedrigwertiger Phosphorverbindungen unter besonderen Schutzmaßnahmen durchzuführen ist. Der damit verbundene hohe technische Aufwand und die hohen Kosten lassen sich beim Einsatz in ungesättigten Polyesterharzen nicht rechtfertigen, da eine besondere thermische Beständigkeit nicht notwendig ist. Eine härtbare Formmasse nach EP-A 1 403 309 oder EP-A 1 403 310 würde damit ihren oben genannten Vorteil der niedrigen Kosten verlieren.

DE-A 34 09 434 offenbart Intumeszenzmassen, die durch Mineralien verdickte Öle oder Fette enthalten, wobei gemäß Beispiel 2 die Herstellung einer Mischung aus Ethylendiaminphosphat, Melamin und Melaminphosphat als wärme- und formstabiler Kitt beschrieben ist.

Es ist daher Aufgabe der vorliegenden Erfindung, halogenfreie und flammwidrige härtbare Formmassen zur Verfügung zu stellen, die bei einer Weiterverarbeitung in Endprodukte bereits bei einem geringen Füllstoffgehalt, insbesondere einem Füllstoffgehalt von weniger als 15 Gew.-% bezogen auf die gesamte Formmasse, die in verschiedenen Bereichen geltenden Flammschutznormen erfüllen. Außerdem sollen die flammwidrigen härtbaren Formmassen die Möglichkeit bieten, diese nach dem Spritz-, Tränk- und Injektionsverfahren weiterzuverarbeiten. Die Einflüsse, die sich aus der Verwendung insbesondere von festen Flammschutzmitteln auf die Formmassen und Materialien ergeben, wie z. B. Anstieg der Formmassenviskosität oder Verschlechterung der mechanischen Eigenschaften der ausgehärteten Formmassen, sollen so gering wie möglich gehalten werden. Schließlich ist es Aufgabe der Erfindung, die genannten Ziele unter Verwendung technisch einfach zugänglicher und kostengünstiger Rohstoffe zu erreichen.

Überraschend wurde gefunden, dass sich halogenfreie, flammwidrige härtbare Formmassen mit extrem niedrigen Füllstoffgehalten herstellen lassen, wenn als Flammschutzmittel ein Kombination aus Ethylendiaminphosphat und wenigstens zwei weiteren Additiven eingesetzt wird.

Die Erfindung betrifft ein halogenfreies Flammschutzmittel für härtbare Formmassen, dadurch gekennzeichnet, dass es sich um eine Kombination aus Ethylendiaminphosphat mit wenigstens einer halogenfreien Phosphorverbindung, ausgewählt aus der Gruppe Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung handelt.

Der Begriff "halogenfrei" bezeichnet Verbindungen, in deren Molekülen die Atome Fluor, Chlor, Brom und Iod nicht enthalten sind. Bevorzugt werden die erfindungsgemäßen Flammschutzmittel aus technischen Rohstoffen hergestellt. Diese technischen Rohstoffe können herstellungsbedingt halogenhaltige Verunreinigungen enhalten, jedoch nicht mehr, als 1.000 ppm Halogen bezogen auf das gesamte Flammschutzmittel entsprechen.

Als Ethylendiaminphosphat wird erfindungsgemäß das Neutralisationsprodukt aus Ethylendiamin und Orthophosphorsäure verstanden. Es ist sehr einfach aus den Komponenten, wie z. B. in EP-A 0 104 350 beschrieben, herstellbar und kommerziell verfügbar.

Bevorzugt wird Ethylendiaminphosphat mit einer Teilchengröße von 0,1 µm bis 1.000 µm, besonders bevorzugt von 0,5 µm bis 250 µm, eingesetzt.

Die genannten halogenfreien Phosporverbindungen können auch als beliebige Mischungen dieser Substanzen eingesetzt werden. Die halogenfreien Phosphorverbindungen sind alle leicht nach bekannten Verfahren herstellbar und/oder kommerziell gut verfügbar.

Bevorzugt ist die halogenfreie Phosphorverbindung eine Flüssigkeit mit einer Viskosität von weniger als 10.000 mPas bei 20 °C, besonders bevorzugt beträgt die Viskosität weniger als 1.000 mPas bei 20 °C.

Bei der halogenfreien Stickstoffverbindung handelt es sich um eine Verbindung ausgewählt aus der Gruppe bestehend aus Harnstoff, Hamstoffcyanurat, Guanidin, Allantoin, Glycouril, Dicyandiamid, Cyanursäure oder ihre Derivate, 1,3,5-Triazin-2,4,6-triamin, Isocyanursäure oder ihre Derivate, 1,3,5-Triazin-2,4,6-triamincyanurat, Melem, Melam, Melon, Ammoniumphosphat, Ammoniumpolyphosphat, 1,3,5-Triazin-2,4,6-triaminphosphat und 1,3,5-Triazin-2,4,6-triamin-polyphosphat. Diese Substanzen sind alle kommerziell gut verfügbar.

Bevorzugt handelt es sich bei der halogenfreien Stickstoffverbindung um 1,3,5-Triazin-2,4,6-triamin.

Bevorzugt enthält das erfindungsgemäße Flammschutzmittel 1 bis 98 Masseteile Ethylendiaminphosphat, 1 bis 98 Masseteile halogenfreie Phosphorverbindung und 1 bis 98 Masseteile halogenfreie Stickstoffverbindung je 100 Masseteile Flammschutzmittel. Daneben kann das Flammschutzmittel weitere Substanzen enthalten, beispielsweise Magnesiumhydroxid, Aluminiumhydroxid oder Borsäure oder ihre Salze.

Die Erfindung betrifft ebenfalls die Verwendung von Flammschutzmitteln enthaltend Ethylendiaminphosphat in Kombination mit wenigstens einer halogenfreien Phosphorverbindung, ausgewählt aus der Gruppe Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenylbisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung zur flammwidrigen Ausrüstung von härtbaren Formmassen und den aus ihnen durch Aushärtung herstellbaren Formkörpern, Laminaten oder Beschichtungen.

Bevorzugt sind diese Formkörper, Laminate oder Beschichtungen durch Glasfasern verstärkt.

Die Erfindung betrifft ebenfalls ein Verfahren zur Herstellung von halogenfreien und flammwidrigen härtbaren Formmassen, dadurch gekennzeichnet, dass man die bekannten Rohstoffe für die Herstellung von härtbaren Formmassen mit einem Flammschutzmittel bestehend aus einer Kombination aus Ethylendiaminphosphat mit wenigstens einer halogenfreien Phosphorverbindung, ausgewählt aus der Gruppe Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung vermischt. Dabei können die Komponenten der Flammschutzmittelkombination einzeln oder in Form beliebiger Mischungen eingesetzt werden.

Im erfindungsgemäßen Verfahren werden bevorzugt 1 bis 100 Masseteile Ethylendiaminphosphat, 1 bis 20 Masseteile halogenfreie Phosphorverbindung und 1 bis 50 Masseteile halogenfreie Stickstoffverbindung je 100 Masseteile härtbare Formmasse eingesetzt.

Besonders bevorzugt werden 5 bis 50 Masseteile Ethylendiaminphosphat, 1 bis 10 Masseteile halogenfreie Phosphorverbindung und 5 bis 30 Masseteile halogenfreie Stickstoffverbindung je 100 Masseteile härtbare Formmasse eingesetzt.

Die Erfindung betrifft auch halogenfreie, flammwidrige härtbare Formmassen, dadurch gekennzeichnet, dass sie als Flammschutzmittel eine Kombination aus Ethylendiaminphosphat mit wenigstens einer halogenfreien Phosphorverbindung, ausgewählt aus der Gruppe Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung enthalten.

Bevorzugt enthalten die härtbaren Formmassen 1 bis 100 Masseteile Ethylendiaminphosphat, 1 bis 20 Masseteile halogenfreie Phosphorverbindung und 1 bis 50 Masseteile halogenfreie Stickstoffverbindung je 100 Masseteile härtbare Formmasse.

Besonders bevorzugt enthalten die härtbaren Formmassen 5 bis 50 Masseteile Ethylendiaminphosphat, 1 bis 10 Masseteile halogenfreie Phosphorverbindung und 5 bis 30 Masseteile halogenfreie Stickstoffverbindung je 100 Masseteile härtbare Formmasse.

Neben den genannten Flammschutzmitteln können die erfindungsgemäßen Formmassen weitere Bestandteile wie Pigmente, Stabilisatoren, Inhibitoren, Reaktivverdünner, Vernetzer, Verarbeitungshilfsmittel, Gleitmittel, Trennmittel, Entformungsmittel, elektrokonduktive Additive, Glasfasern, Kohlefasern, synthetische Fasern oder Eindickungsmittel enthalten.

In einer besonders bevorzugten Ausführungsform der Erfindung handelt es sich bei den härtbaren Formmassen um ungesättigte Polyesterharze.

Ungesättigte Polyesterharze sind Polykondensationsprodukte aus gesättigten und ungesättigten Dicarbonsäuren oder deren Anhydriden mit Diolen. Die ungesättigten Polyesterharze werden gehärtet durch radikalische Polymerisation mit Monomeren wie Styrol, Methylmethacrylat, Diallylphthalat und ähnlichen Vinylverbindungen. Die Härtung wird durch Initiatoren, wie beispielsweise Peroxiden, und Beschleuniger gesteuert. Die Doppelbindungen in der Polyesterkette reagieren dabei mit der Doppelbindung des copolymerisierbaren Lösungsmittelmonomers.

Die wichtigsten Dicarbonsäuren bzw. Anhydride sind Maleinsäureanhydrid, Fumarsäure, Phthalsäureanhydrid und Terephthalsäure. Am häufigsten wird als Diol 1,2-Propandiol eingesetzt. Daneben lassen sich auch Ethylenglykol, Diethylenglykol und Neopentylglykol verwenden. Als Monomer zur Vernetzung ist Styrol am weitesten verbreitet. Es ist beliebig mit den ungesättigten Polyesterharzen mischbar und lässt sich gut copolymerisieren, wobei der Styrolgehalt der ungesättigten Polyesterharze üblicherweise zwischen 25 und 40 Gew.-% liegt.

Härtbare Formmassen auf Basis von ungesättigten Polyesterharzen werden in der Bauindustrie zur Herstellung von Lichtplatten, Fassadenelementen, Schwimmbecken, sowie als Vergussmassen, Beschichtungen und Reparaturmörtel; in der allgemeinen Industrie zur Herstellung von Behältern für Getränke, Heizöl, Chemikalien, Dünge-, Nahrungs- und Futtermittel, von Chemieapparaturen, Abwasserrohren und Kühltürmen; in der Elektroindustrie für Kabelverteiler- und Schaltschränke, Leuchtenabdeckungen, Steckerleisten, Schalterdeckel und ähnliches; im Transportwesen für Wohnwagen, Aufbauten für Kühlwagen, zur Herstellung von Stoßfängern, Frachtcontainern, Sitzschalen und anderem; im Boots- und Schiffsbau zum Bau von Sport- und Rettungsbooten, Fischereifahrzeugen, Bojen- und Rettungsinseln; zur Herstellung von Formteilen unterschiedlichster Art (Apparategehäuse, Stühle, Bänke, Verkehrsschilder, Knopfplatten und anderem) eingesetzt.

In einer weiteren, besonders bevorzugten Ausführungsform der Erfindung handelt es sich bei den härtbaren Formmassen um Epoxidharze.

Als Epoxidharze bezeichnet man oligomere Verbindungen mit mehr als einer Epoxid-Gruppe pro Molekül. Die Umwandlung der Epoxidharze in Duroplaste erfolgt über Polyadditionsreaktionen mit geeigneten Härtern, wie z. B. Polyaminen oder Dicyandiamiden, bzw. durch Polymerisation über die Epoxid-Gruppen. Der überwiegende Anteil an Epoxidharzen wird durch Umsetzung von Bisphenol A mit Epichlorhydrin im alkalischen Milieu unter Bildung von Oligomeren mit Molmassen von 400 - 10.000 g/mol hergestellt. Epoxidharze mit geringer Molmasse sind leichtbis zähflüssig, die mit hoher Molmasse dagegen sind fest. Je nach Anzahl von Epoxid-Gruppen und Hydroxy-Gruppen je Molekül lassen sich Epoxidharze zu kalthärtenden Zweikomponentensystemen, Einbrennlacken oder Pulverlacken verarbeiten.

Härtbare Formmassen auf Basis von Epoxidharzen werden als Gießharze in der Elektroindustrie zur Herstellung von Bauteilen für Motoren und Isolatoren, im Werkzeugbau, im Bauwesen für Lacke, Beschichtungen und Beläge sowie Klebstoffe für Kunststoffe, Metalle und Betonelemente und als Laminate im Flugzeug- und Fahrzeugbau eingesetzt. Epoxidharze finden außerdem Verwendung als Außen- und Innenlackierungen von Tanks und Behältern für z.B. Heizöle und Treibstoffe und eignen sich als Schutzanstriche von z.B. Rohrleitungen, Armaturen und Geräten sowie als Beschichtung von Böden und Wänden.

Anhand der nachfolgenden Beispiele wird die Erfindung näher erläutert, ohne dass dadurch eine Einschränkung der Erfindung bewirkt werden soll.

### Beispiele

### Herstellung der Prüfkörper:

Die Prüfkörper werden aus den in Tabelle 1 aufgeführten Rohstoffen in den angegebenen Mengenverhältnissen hergestellt. Zuerst werden die flüssigen und festen Flammschutzmittel in das Harz eingerührt. Anschließend werden alle Komponenten gründlich dispergiert. Dann werden nacheinander Peroxid und Katalysator eingerührt und dispergiert. Die nun reaktiven Mischungen werden in Formen gegossen, in denen das Material aushärten kann. Die Temperaturen von Mischung und Form sind so zu wählen, dass genügend Topfzeit für die Handhabung zur Verfügung steht, aber die Topfzeit nicht solange ausfällt, dass Inhaltsstoffe sedimentieren können. Nach 24 Stunden werden die Formen noch für 8 Stunden bei 80 °C im Ofen nachgehärtet.

### Prüfung des Brandverhaltens:

Nach der Entformung werden die Prüfkörper auf ihr Brandverhalten nach UL 94 (Standard Test for Flammability of Plastics Materials for Parts and Devices) geprüft. Dazu werden die Prüfkörper mit einer Abmessung von ca. 125 x 13 x 3,5 mm vertikal in einer Halterung eingespannt und zweimal nacheinander mit einer Kleinbrennerflamme beflammt. Wenn die Summe der Nachbrennzeiten in einer Serie von fünf Prüfkörpern aus einer Rezeptur weniger als 50 s beträgt, kein Prüfkörper nach Beflammungsende mehr als 10 s nachbrennt und kein Prüfkörper brennend abtropft, so wird die Rezeptur der Klasse V-0 zugeordnet.

Die Mengenangaben der Rezepturbestandteile in der Tabelle 1 sind Gewichtsteile, die Flammschutzmittelgehalte sind als Gewichtsprozent bezogen auf die gesamte härtbare Formmasse angegeben. Alle darin aufgeführten Rezepturen erreichen die Klasse V-0 nach UL 94.

**Tabelle 1: Rezepturen der Beispiele 1 und 2 und der nicht erfindungsgemäßen Vergleichsbeispiele 3 bis 7 (Beispiele geordnet nach steigendem Gehalt an festen Flammschutzmitteln)**

| | Beispiele | | | | | | |
|---|---|---|---|---|---|---|---|
| Rezepturbestandteile | 1 | 2 | 3* | 4* | 5* | 6* | 7* |
| Orthophthalsäureharz | 80 | 80 | 75 | 75 | 75 | 70 | 60 |
| Ethylendiaminphosphat | 5 | 8 | | | | | |
| 1,3,5-Triazin-2,4,6-triamin | 4 | 5 | 15 | | | | |
| 1,3,5-Triazin-2,4,6-triamincyanurat | | | | 15 | | | |
| AMPP** | | | | | 15 | | |
| Aluminiumhydroxid | | | | | | 15 | 30 |
| Dimethylpropanphosphonat | 10 | 6 | 10 | 10 | 10 | 15 | 10 |
| MEK-Peroxid (Härter) | 1 | 1 | 1 | 1 | 1 | 1 | 1 |
| Co-II-ethylhexanoat-Lösung | 0,5 | 0,5 | 0,5 | 0,5 | 0,5 | 0,5 | 0,5 |
| (Katalysator) | | | | | | | |

| Flammschutzmittelgehalte | | | | | | | |
|---|---|---|---|---|---|---|---|
| gesamt (Gew.-%) | 19 | 19 | 25 | 25 | 25 | 30 | 39 |
| feste Bestandteile (Gew.-%) | 9 | 13 | 15 | 15 | 15 | 15 | 30 |

| | | | | | | | |
|---|---|---|---|---|---|---|---|
| *) nicht erfindungsgemäße Vergleichsbeispiele **) Aluminium-monomethylpropanphosphonat | | | | | | | |

### Ergebnisse

Der Tabelle 1 sind die Flammschutzmittelgehalte zu entnehmen, die notwendig sind, um die geforderte Flammwidrigkeit (Klasse V-0 nach UL 94) zu erreichen. Bei Verwendung von Aluminiumhydroxid lässt sich zwar durch Erhöhung des Anteils der flüssigen Phosphorverbindung Dimethylpropanphosphonat eine Verringerung des Feststoffanteils erreichen (Vergleichsbeispiele 6 und 7), jedoch gelingt es nicht, den Feststoffanteil unter 15 % zu senken. Durch Ersatz des Aluminiumhydroxids durch die wirksameren Flammschutzmittel 1,3,5-Triazin-2,4,6-triamin-cyanurat oder Aluminium-monomethylpropanphosphonat ist es möglich, die gesamten Flammschutzmittelgehalte zu senken, aber der Feststoffgehalt kann dadurch nicht verringert werden (Vergleichsbeispiele 4 und 5). Auch bei der aus WO97/31056 bekannten Kombination von 1,3,5-Triazin-2,4,6-triamin mit einer Phosphorverbindung ist keine Verbesserung zu beobachten (Vergleichsbeispiel 3). Es wird damit bestätigt, dass die in WO97/31056 genannte Mindestmenge an festem Flammschutzmittel von 15 % nicht ohne Einbußen in der Flammwidrigkeit unterschritten werden kann.

Überraschender Weise zeigt die Kombination aus Ethylendiaminphosphat mit 1,3,5-Triazin-2,4,6-triamin und Dimethylpropanphosphonat eine besondere Wirksamkeit gegenüber allen anderen Rezepturen (Beispiele 1 und 2). Die Menge fester Flammschutzmittel kann in diesen Fällen unter 15 % abgesenkt werden, obwohl der Anteil der flüssigen Phosphorverbindung hierbei auch nicht höher liegt, als bei den Vergleichsbeispielen.

Die erfindungsgemäßen Flammschutzmittel sind wegen ihres geringen Feststoffgehaltes besonders geeignet, wenn bei der Verarbeitung von härtbaren Formmassen eine geringe Viskosität und bei den ausgehärteten Harzen eine gute Flammwidrigkeit, hohe mechanische Werte, eine niedrige Dichte und eine gute Lichtdurchlässigkeit gefordert werden. Da sie halogenfrei sind, werden die aus dem Stand der Technik bekannten Nachteile von halogenhaltigen Formmassen vermieden. Durch Einsatz technisch gut verfügbarer und kostengünstiger Rohstoffe werden die wirtschaftlichen Vorteile der härtbaren Formmassen beibehalten.

## Patentansprüche

1. Flammschutzmittel für härtbare Formmassen, **dadurch gekennzeichnet, dass** es eine Kombination- aus. Ethylendiaminphosphat und wenigstens einer halogenfreien Phosphorverbindung ausgewählt aus Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters und wenigstens einer halogenfreien Stickstoffverbindung enthält.

2. Flammschutzmittel nach Anspruch 1, **dadurch gekennzeichnet, dass** es sich bei der halogenfreien Stickstoffverbindung um Harnstoff, Harnstoffcyanurat, Guanidin, Allantoin, Glycouril, Dicyandiamid, Cyanursäure oder ihre Derivate, 1,3,5-Triazin-2,4,6-triamin, Isocyanursäure oder ihre Derivate, 1,3,5-Triazin-2,4,6-triamincyanurat, Melem, Melam, Melon, Ammoniumphosphat, Ammoniumpolyphosphat, 1,3,5-Triazin-2,4,6-triaminphosphat oder 1,3,5-Triazin-2,4,6-triaminpolyphosphat handelt.

3. Flammschutzmittel nach Anspruch 1, **dadurch gekennzeichnet, dass** es sich bei der halogenfreien Phosphorverbindung um Dimethylmethanphosphonat, Diethylethanphosphonat oder Dimethylpropanphosphonat und bei der halogenfreien Stickstoffverbindung um 1,3,5-Triazin-2,4,6-triamin, 1,3,5-Triazin-2,4,6-triaminphosphat, 1,3,5-Triazin-2,4,6-triaminpolyphosphat oder 1,3,5-Triazin-2,4,6-triamincyanurat handelt.

4. Verwendung von Flammschutzmitteln enthaltend Ethylendiaminphosphat und wenigstens eine halogenfreie Phosphorverbindung ausgewählt aus Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens eine halogenfreie Stickstoffverbindung zur flammwidrigen Ausrüstung von härtbaren Formmassen und den aus ihnen durch Aushärtung herstellbaren Formkörpern, Laminaten oder Beschichtungen.

5. Verfahren zur Herstellung von halogenfreien und flammwidrigen härtbaren Formmassen, **dadurch gekennzeichnet, dass** die bekannten Rohstoffe für die Herstellung von härtbaren Formmassen mit einem Flammschutzmittel bestehend aus einer Kombination aus Ethylendiaminphosphat, wenigstens einer halogenfreien Phosphorverbindung ausgewählt aus Dimethylmethanphosphonat, Diethylethanphosphonat, Dimethylpropanphosphonat, Dimethylbutanphosphonat, Triethylphosphat, Tributylphosphat, Trüsobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung vermischt werden.

6. Halogenfreie und flammwidrige härtbare Formmassen, **dadurch gekennzeichnet, dass** sie als Flammschutzmittel eine Kombination aus Ethylendiaminphosphat, wenigstens einer halogenfreien Phosphorverbindung ausgewählt aus Dimethylmethanphosphonat, Diethylethanphosphonat, Dimethylpropanphosphonat, Dimethylbutanphosphonat, Triethylphosphat, Tributylphosphat, Triisobutylphosphat, Triphenylphosphat, Diphenylkresylphosphat, Trikresylphosphat, Mischungen von isopropylierten Arylphosphaten, Mischungen von tert.-butylierten Arylphosphaten, Tetraphenyl-resorcindiphosphat oder Tetraphenyl-bisphenol-A-diphosphat, das Calcium-, Aluminium-, oder Zinksalz der Diethylphosphinsäure, des Methanphosphonsäuremonomethylesters oder des Propanphosphonsäuremonomethylesters, und wenigstens einer halogenfreien Stickstoffverbindung enthalten.

7. Formmassen nach Anspruch 6, **dadurch gekennzeichnet, dass** es sich um ungesättigte Polyesterharze handelt.

8. Formmassen nach Anspruch 6, **dadurch gekennzeichnet, dass** es sich um Epoxidharze handelt.

9. Formmassen nach mindestens einem der Ansprüche 6 bis 8, **dadurch gekennzeichnet, dass** es sich bei der halogenfreien Phosphorverbindung um Dimethylmethanphosphonat, Diethylethanphosphonat, oder Dimethylpropanphosphonat und bei der halogenfreien Stickstoffverbindung um 1,3,5-Triazin-2,4,6-triamin, 1,3,5-Triazin-2,4,6-triaminphosphat, 1,3,5-Triazin-2,4,6-triaminpolyphosphat oder 1,3,5-Triazin-2,4,6-triamincyanurat handelt.

10. Formmassen nach mindestens einem der Ansprüche 6 bis 9, **dadurch gekennzeichnet, dass** sie 1 bis 100 Masseteile Ethylendiaminphosphat, 1 bis 20 Masseteile der halogenfreien Phosphorverbindung und 1 bis 50 Masseteile der halogenfreien Stickstoffverbindung je 100 Masseteile Formmasse enthalten.

11. Formmassen nach mindestens einem der Ansprüche 6 bis 9, **dadurch gekennzeichnet, dass** sie 5 bis 50 Masseteile Ethylendiaminphosphat, 1 bis 10 Masseteile der halogenfreien Phosphorverbindung und 5 bis 30 Masseteile der halogenfreien Stickstoffverbindung je 100 Masseteile Formmasse enthalten.

12. Formkörper, Laminate oder Beschichtungen, **dadurch gekennzeichnet, dass** sie aus einer härtbaren Formmasse nach mindestens einem der Ansprüche 6 bis 11 hergestellt wurden.

13. Formkörper, Laminate oder Beschichtungen nach Anspruch 12, **dadurch gekennzeichnet, dass** sie durch Glasfasern verstärkt sind.

## Claims

1. Flameproofing agent for curable moulding materials, **characterized in that** it contains a combination of ethylenediamine phosphate and at least one halogen-free phosphorus compound selected from dimethyl methanephosphonate, diethyl ethanephosphonate, dimethyl propanephosphonate, dimethyl butanephosphonate, triethyl phosphate, tributyl phosphate, triisobutyl phosphate, triphenyl phosphate, diphenyl cresyl phosphate, tricresyl phosphate, mixtures of isopropylated aryl phosphates, mixtures of tert-butylated aryl phosphates, tetraphenyl resorcinol diphosphate or tetraphenyl bisphenol A diphosphate, the calcium, aluminium or zinc salt of diethylphosphinic acid, of monomethyl methanephosphonate or of monomethyl propanephosphonate, and at least one halogen-free nitrogen compound.

2. Flameproofing agent according to Claim 1, **characterized in that** the halogen-free nitrogen compound is urea, urea cyanurate, guanidine, allantoin, glycouril, dicyandiamide, cyanuric acid or its derivates, 1,3,5-triazine-2,4,6-triamine, isocyanuric acid or its derivatives, 1,3,5-triazine-2,4,6-triamine cyanurate, melem, melam, melon, ammonium phosphate, ammonium polyphosphate, 1,3,5-triazine-2,4,6-triamine phosphate or 1,3,5-triazine-2,4,6-triamine polyphosphate.

3. Flameproofing agent according to Claim 1, **characterized in that** the halogen-free phosphorus compound is dimethyl methanephosphonate, diethyl ethanephosphonate or dimethyl propanephosphonate and the halogen-free nitrogen compound is 1,3,5-triazine-2,4,6-triamine, 1,3,5-triazine-2,4,6-triamine phosphate, 1,3,5-triazine-2,4,6-triamine polyphosphate or 1,3,5-triazine-2,4,6-triamine cyanurate.

4. Use of flameproofing agents containing ethylenediamine phosphate and at least one halogen-free phosphorus compound selected from dimethyl methanephosphonate, diethyl ethanephosphonate, dimethyl propanephosphonate, dimethyl butanephosphonate, triethyl phosphate, tributyl phosphate, triisobutyl phosphate, triphenyl phosphate, diphenyl cresyl phosphate, tricresyl phosphate, mixtures of isopropylated aryl phosphates, mixtures of tert-butylated aryl phosphates, tetraphenyl resorcinol diphosphate or tetraphenyl bisphenol A diphosphate, the calcium, aluminium or zinc salt of diethylphosphinic acid, of monomethyl methanephosphonate or of monomethyl propanephosphonate, and at least one halogen-free nitrogen compound for the flame-retardant treatment of curable moulding materials and the mouldings, laminates, or coatings which can be produced from them by curing.

5. Process for the preparation of halogen-free and flame-retardant curable moulding materials, **characterized in that** the known raw materials for the preparation of curable moulding materials are mixed with a flameproofing agent consisting of a combination of ethylenediamine phosphate, at least one halogen-free phosphorus compound selected from dimethyl methanephosphonate, diethyl ethanephosphonate, dimethyl propanephosphonate, dimethyl butanephosphonate, triethyl phosphate, tributyl phosphate, triisobutyl phosphate, triphenyl phosphate, diphenyl cresyl phosphate, tricresyl phosphate, mixtures of isopropylated aryl phosphates, mixtures of tert-butylated aryl phosphates, tetraphenyl resorcinol diphosphate or tetraphenyl bisphenol A diphosphate, the calcium, aluminium or zinc salt of diethylphosphinic acid, of monomethyl methanephosphonate or of monomethyl propanephosphonate, and at least one halogen-free nitrogen compound.

6. Halogen-free and flame-retardant curable moulding materials, **characterized in that** they contain a combination of ethylenediamine phosphate, at least one halogen-free phosphorus compound selected from dimethyl methanephosphonate, diethyl ethanephosphonate, dimethyl propanephosphonate, dimethyl butanephosphonate, triethyl phosphate, tributyl phosphate, triisobutyl phosphate, triphenyl phosphate, diphenyl cresyl phosphate, tricresyl phosphate, mixtures of isopropylated aryl phosphates, mixtures of tert-butylated aryl phosphates, tetraphenyl resorcinol diphosphate or tetraphenyl bisphenol A diphosphate, the calcium, aluminium or zinc salt of diethylphosphinic acid, of monomethyl methanephosphonate or of monomethyl propanephosphonate, and at least one halogen-free nitrogen compound as a flameproofing agent.

7. Moulding materials according to Claim 6, **characterized in that** they are unsaturated polyester resins.

8. Moulding materials according to Claim 6, **characterized in that** they are epoxy resins.

9. Moulding materials according to at least one of Claims 6 to 8, **characterized in that** the halogen-free phosphorus compound is dimethyl methanephosphonate, diethyl ethanephosphonate, or dimethyl propanephosphonate and the halogen-free nitrogen compound is 1,3,5-triazine-2,4,6-triamine, 1,3,5-triazine-2,4,6-triamine phosphate, 1,3,5-triazine-2,4,6-triamine polyphosphate or 1,3,5-triazine-2,4,6-triamine isocyanurate.

10. Moulding materials according to at least one of Claims 6 to 9, **characterized in that** they contain 1 to 100 parts by mass of ethylenediamine phosphate, 1 to 20 parts by mass of the halogen-free phosphorus compound and 1 to 50 parts by mass of the halogen-free nitrogen compound per 100 parts by mass of moulding material.

11. Moulding materials according to at least one of Claims 6 to 9, **characterized in that** they contain 5 to 50 parts by mass of ethylenediamine phosphate, 1 to 10 parts by mass of the halogen-free phosphorus compound and 5 to 30 parts by mass of the halogen-free nitrogen compound per 100 parts by mass of moulding material.

12. Mouldings, laminates or coatings, **characterized in that** they were produced from a curable moulding material according to at least one of Claims 6 to 11.

13. Mouldings, laminates or coatings according to Claim 12, **characterized in that** they are reinforced by glass fibres.

## Revendications

1. Agent ignifuge pour masses de moulage durcissables, **caractérisé en ce qu'**il contient une combinaison de phosphate d'éthylènediamine et d'au moins un composé phosphoré exempt d'halogène, choisi parmi le diméthylméthanephosphonate, le diéthyléthanephosphonate, le diméthylpropanephosphonate, le diméthylbutanephosphonate, le phosphate de triéthyle, le phosphate de tributyle, le phosphate de triisobutyle, le phosphate de triphényle, le phosphate de diphénylcrésyle, le phosphate de tricrésyle, les mélanges de phosphates d'aryle isopropylés, les mélanges de phosphates d'aryle tert-butylés, le diphosphate de tétraphénylrésorcinol ou le diphosphate de tétraphénylbisphénol-A, le sel de calcium, d'aluminium ou de zinc de l'acide diéthylphosphinique, de l'ester monométhylique de l'acide méthanephosphonique ou de l'ester monométhylique de l'acide propanephosphonique, et d'au moins un composé azoté exempt d'halogène.

2. Agent ignifuge selon la revendication 1, **caractérisé en ce qu'**il s'agit, pour le composé azoté exempt d'halogène, d'urée, de cyanurate d'urée, de guanidine, d'allantoïne, de glycolurile, de dicyanodiamide, d'acide cyanurique ou de ses dérivés, de 1,3,5-triazine-2,4,6-triamine, d'acide isocyanurique ou de ses dérivés, de cyanurate de 1,3,5-triazine-2,4,6-triamine, de mélem, de mélam, de mélon, de phosphate d'ammonium, de polyphosphate d'ammonium, de phosphate de 1,3,5-triazine-2,4,6-triamine ou de polyphosphate de 1,3,5-triazine-2,4,6-triamine.

3. Agent ignifuge selon la revendication 1, **caractérisé en ce qu'**il s'agit, pour le composé phosphoré exempt d'halogène, de diméthylméthanephosphonate, de diéthyléthanephosphonate ou de diméthylpropanephosphonate et, pour le composé azoté exempt d'halogène, de 1,3,5-triazine-2,4,6-triamine, de phosphate de 1,3,5-triazine-2,4,6-triamine, de polyphosphate de 1,3,5-triazine-2,4,6-triamine ou de cyanurate de 1,3,5-triazine-2,4,6-triamine.

4. Utilisation d'agents ignifuges contenant du phosphate d'éthylènediamine et au moins un composé phosphoré exempt d'halogène, choisi parmi le diméthylméthanephosphonate, le diéthyléthanephosphonate, le diméthylpropanephosphonate, le diméthylbutanephosphonate, le phosphate de triéthyle, le phosphate de tributyle, le phosphate de triisobutyle, le phosphate de triphényle, le phosphate de diphénylcrésyle, le phosphate de tricrésyle, les mélanges de phosphates d'aryle isopropylés, les mélanges de phosphates d'aryle tert-butylés, le diphosphate de tétraphénylrésorcinol ou le diphosphate de tétraphénylbisphénol-A, le sel de calcium, d'aluminium ou de zinc de l'acide diéthylphosphinique, de l'ester monométhylique de l'acide méthanephosphonique ou de l'ester méthylique de l'acide propanephosphonique, et au moins un composé azoté exempt d'halogène pour l'apprêt ignifuge de masses de moulage durcissables et des corps moulés, stratifiés ou revêtements pouvant être produits à partir de celles-ci par durcissement.

5. Procédé pour la production de masses de moulage durcissables, exemptes d'halogène et ignifuges, **caractérisé en ce que** les matières premières connues pour la production de masses de moulage durcissables sont mélangées avec un agent ignifuge constitué par une combinaison de phosphate d'éthylènediamine, d'au moins un composé phosphoré exempt d'halogène, choisi parmi le diméthylméthanephosphonate, le diéthyléthanephosphonate, le diméthylpropanephosphonate, le diméthylbutanephosphonate, le phosphate de triéthyle, le phosphate de tributyle, le phosphate de triisobutyle, le phosphate de triphényle, le phosphate de diphénylcrésyle, le phosphate de tricrésyle, les mélanges de phosphates d'aryle isopropylés, les mélanges de phosphates d'aryle tert-butylés, le diphosphate de tétraphénylrésorcinol ou le diphosphate de tétraphénylbisphénol-A, le sel de calcium, d'aluminium ou de zinc de l'acide diéthylphosphinique, de l'ester monométhylique de l'acide méthanephosphonique ou de l'ester monométhylique de l'acide propanephosphonique, et d'au moins un composé azoté exempt d'halogène.

6. Masses de moulage durcissables, exemptes d'halogène et ignifuges, **caractérisées en ce qu'**elles contiennent comme agent ignifuge une combinaison de phosphate d'éthylènediamine, d'au moins un composé phosphoré exempt d'halogène, choisi parmi le diméthylméthanephosphonate, le diéthyléthanephosphonate, le diméthylpropanephosphonate, le diméthylbutanephosphonate, le phosphate de triéthyle, le phosphate de tributyle, le phosphate de triisobutyle, le phosphate de triphényle, le phosphate de diphénylcrésyle, le phosphate de tricrésyle, les mélanges de phosphates d'aryle isopropylés, les mélanges de phosphates d'aryle tert-butylés, le diphosphate de tétraphénylrésorcinol ou le diphosphate de tétraphénylbisphénol-A, le sel de calcium, d'aluminium ou de zinc de l'acide diéthylphosphinique, de l'ester monométhylique de l'acide méthanephosphonique ou de l'ester monométhylique de l'acide propanephosphonique, et d'au moins un composé azoté exempt d'halogène.

7. Masses de moulage selon la revendication 6, **caractérisées en ce qu'**il s'agit de résines de polyester insaturé.

8. Masses de moulage selon la revendication 6, **caractérisées en ce qu'**il s'agit de résines époxyde.

9. Masses de moulage selon au moins l'une quelconque des revendications 6 à 8, **caractérisées en ce qu'**il s'agit, pour le composé phosphoré exempt d'halogène, de diméthylméthanephosphonate, de diéthyléthanephosphonate ou de diméthylpropanephosphonate et, pour le composé azoté exempt d'halogène, de 1,3,5-triazine-2,4,6-triamine, de phosphate de 1,3,5-triazine-2,4,6-triamine, de polyphosphate de 1,3,5-triazine-2,4,6-triamine ou de cyanurate de 1,3,5-triazine-2,4,6-triamine.

10. Masses de moulage selon au moins l'une quelconque des revendications 6 à 9, **caractérisées en ce qu'**elles contiennent 1 à 100 parties en masse de phosphate d'éthylènediamine, 1 à 20 parties en masse du composé phosphoré exempt d'halogène et 1 à 50 parties en masse du composé azoté exempt d'halogène par 100 parties en masse de masse de moulage.

11. Masses de moulage selon au moins l'une quelconque des revendications 6 à 9, **caractérisées en ce qu'**elles contiennent 5 à 50 parties en masse de phosphate d'éthylènediamine, 1 à 10 parties en masse du composé phosphoré exempt d'halogène et 5 à 30 parties en masse du composé azoté exempt d'halogène par 100 parties en masse de masse de moulage.

12. Corps moulés, stratifiés ou revêtements **caractérisés en ce qu'**ils sont produits à partir d'une masse de moulage durcissable selon au moins l'une quelconque des revendications 6 à 11.

13. Corps moulés, stratifiés ou revêtements selon la revendication 12, **caractérisés en ce qu'**ils sont renforcés par des fibres de verre.
